# EUROPEAN PATENT SPECIFICATION

(11) **EP 1 333 696 B1**
(45) Date of publication and mention of the grant of the patent: **25.12.2013**
(21) Application number: 03002208.1
(22) Date of filing: 31.01.2003
(51) Int. Cl.: H04W 8/24, H04W 48/04

(54) **Enabling and/or inhibiting an operation of a wireless communication unit**
Zulassung und/oder Unterdrücken des Betriebs einer drahtlosen Kommunikationseinheit
Permission et/ou inhibition de l'opération d'une unité de communication sans fil

(30) Priority: 01.02.2002 GB 0202380
(43) Date of publication of application: 06.08.2003
(73) Proprietor: Motorola Mobility LLC, Libertyville, IL 60048 (US)
(72) Inventor: Leliveld, Thomas, Birmingham B16 8HW (GB)
(74) Representative: Wray, Antony John

(56) References cited:
- EP-A- 0 929 203
- WO-A-96/33587
- US-A- 5 159 625
- US-A- 6 148 197

## Description

### Field of the Invention

This invention relates to a method, and apparatus for implementing the method, of enabling and/or inhibiting an operation of a wireless communication unit. The invention is applicable to, but not limited to, remote re-configuration of a wireless communication unit by a communication network.

### Background of the Invention

In the field of this invention it is known that in order for a wireless communication unit such as a mobile phone to be able to communicate with a serving communication network, the wireless communication unit must be capable of transmitting and receiving within the same frequency band as the network with which the wireless communication unit is to communicate.

If a user wishes to 'roam' internationally between countries, where communication is supported by a different network operator, the user may request that his/her serving network operator enable such roaming to be allowed. Roaming, in this context, enables the user to 'register' on a roamed-to network, and thereby transmit and receive calls via the network operator serving this roamed-to network to/from the user's home network. This communication link typically results from a service agreement between the two network operators.

However, some wireless communication networks managed by different operators often use different frequency bands. For example, for wireless cellular-based communications in Europe there are generally two frequency bands used, namely 900 MHz (GSM) and 1800 MHz (DCS). The situation is further complicated due to the fact that in other regions of the world other frequency bands may be used for wireless cellular-based communications, for example 850 MHz (D-AMPS) and 1900 MHZ (PCS) supported in the USA.

Multi- (frequency) band wireless communication units are known. Such units may include either a multi-band antenna or two or more separate antennas, for example one for each frequency band, in order to support multi-band communications. Thus, some wireless communication units are capable of accessing a number of desirable frequency bands, in order to access a variety of wireless communication services.

Manufacturers and customers benefit from such dual-band or multi-band communication units. Manufacturers are able to offer a single wireless communication unit that can be sold to customers across many regions of the world that support multi-band communication. Therefore the manufacturers do not need to design and develop individual wireless communication units according to the specific radio frequency (RF) hardware and/or software requirements needed for each country, region or network.

A benefit to customers is that they are provided with the ability to 'roam' from country to country, where different frequency bands are used, without the need to carry a number of separate wireless communication units. Also, the customers benefit from less expensive communication units, as they are able to reap the cost efficiencies from manufacturers producing fewer wireless communication units to serve a number of markets.

Network operators have determined that it is sometimes desirable for a wireless cellular phone to be provided limited access to certain frequency bands, for example to limit the networks or regions or countries with which that cellular phone can be used. Such restrictions imposed on cellular users can be made either temporary or permanent. These restrictions are generally imposed upon manufacture or when the unit is marketed or sold.

For example, a multi-band device may be capable of transmitting and receiving within the 900 MHz and 1800MHz frequency bands for Europe as well as within the 850 MHz and 1900 MHz frequency bands for the US. Network operators have marketed and sold devices in Europe that are prohibited from transmitting and receiving in non-European frequency bands.

Furthermore, network operators have implemented mechanisms for disabling all, or a significant proportion, of the functionality of a cellular phone, when the user reports the cellular phone as lost or stolen. Such a disabling operation is performed in the network, by rejecting any attempted calls to/from the cellular phone.

Within wireless communications, it is also known that a network operator assigns frequencies over-the-air to wireless communication units, to enable the wireless communication unit to access the network services or communicate with other units. Notably, such assignment of frequencies occurs 'in-band', i.e. within the range of frequencies allocated to a particular communication standard or protocol.

The inventor of the present invention believes that there is provision on certain wireless communication units, such as Motorola's Timeport^{™} cellular phone, for the user to manually switch between predefined frequency bands. However, the provision of such a manual switching feature requires the user to know when, and how, to manually switch the wireless communication unit's RF operation. Furthermore, the provision of this feature is configured at the point of manufacture, and subsequent use is solely dictated by the user's individual wishes or requirements.

WO 96/33587 discloses the programming of a wireless communication unit with selection criteria that is used to select a frequency range for operation based upon neighbour network list transmitted by a network.

A need therefore exists for an improved method and apparatus for a network operator or manufacturer to dynamically control the operation capabilities of a wireless communication unit wherein the abovementioned disadvantages may be alleviated.

### Statement of Invention

In accordance with a first aspect of the present invention, there is provided a wireless communication system, as claimed in Claim 1.

In accordance with a second aspect of the present invention, there is provided a wireless communication unit, as claimed in Claim 10.

In accordance with a third aspect, the present invention provides a method for dynamically enabling and/or inhibiting an operation of a wireless communication unit, as claimed in claim 14.

Further aspects of the present invention are as claimed in the dependent claims.

In summary, the present invention proposes, inter-alia, a method, and apparatus for implementing the method, for a wireless communication network to enable or inhibit an operation of a wireless communication unit, for example with respect to a frequency band of operation or a signal format used by the wireless communication unit. If a user wishes to use the communication unit in another region, the user can request provision of service from the network operator with which they are subscribed. In this way, the network operator can charge the user for the privilege of access to communication services in other frequency bands.

### Brief Description of the Drawings

Exemplary embodiments of the present invention will now be described, with reference to the accompanying drawings, in which:
FIG. 1 illustrates a wireless communication unit, adapted in accordance with a preferred embodiment'of the present invention;
FIG. 2 illustrates a block diagram of a communication system or method of re-configuring an operation a wireless communication unit in such a communication system, in accordance with the preferred embodiment of the present invention; and
FIG. 3 illustrates a flowchart of the preferred embodiment of the present invention.

### Description of Preferred Embodiments

A communication unit according to a first embodiment of the present invention is capable of transmitting and receiving radio frequency (RF) signals within a plurality of frequency bands, for example 900 MHz, 1800 MHz, 850 MHz and 1900 MHz. The RF operation of the communication unit is capable of being configured such that the transmission and/or reception of signals in each frequency band can be dynamically enabled/inhibited by the network operator.

For networks that are managed by different operators, who provide for both digital and analogue communication, it is within the contemplation of the invention that a communication unit, capable of transmitting and receiving both digital and analogue signals, may be restricted to transmitting and receiving either a digital or analogue signal format. Furthermore, such enabling and/or inhibiting of signal formats may include particular modulation schemes, for example to limit the rate/amount of information a user may transmit or receive. It is within the contemplation of the invention that such restriction may be effected at the point of sale of the communication unit to the user.

Additionally, the format of the signals transmitted to or received from a communication unit may relate to the following signal formats, for example time division multiple access (TDMA), code division multiple access (CDMA), wideband CDMA, circuit switched and packet switched signals etc., which may also vary between networks. Such signalling formats include those defined by standards such as Global Systems for Mobile Communications (GSM), General Packet Radio Service (GPRS), and Universal Mobile Telecommunications System (UMTS), etc.

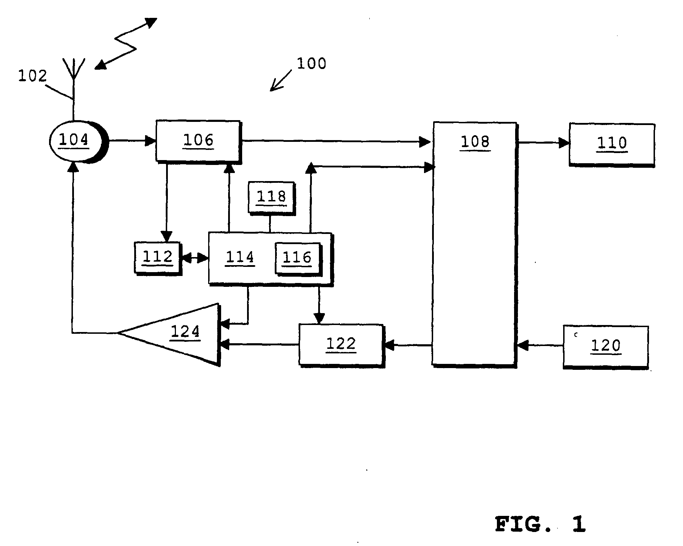

Referring first to FIG. 1, there is shown a block diagram of part of a wireless communication unit 100 adapted to support the inventive concepts of the preferred embodiments of the present invention. The communication unit 100, in the context of the preferred embodiment of the invention, is a mobile phone. As such, the communication unit 100 contains an antenna 102 preferably coupled to a duplex filter, antenna switch or circulator 104 that provides isolation between receive and transmit chains within the communication unit 100.

The receiver chain, as known in the art, includes scanning receiver front-end circuitry 106 (effectively providing reception, filtering and intermediate or baseband frequency conversion). The scanning front-end circuit is serially coupled to a signal processing function 108. An output from the signal processing function 108 is provided to a suitable output device 110, such as a screen or flat panel display.

The receiver chain also includes received signal strength indicator (RSSI) circuitry 112, which in turn is coupled to a controller 114 for maintaining overall communication unit control. The controller 114 is also coupled to the scanning receiver front-end circuitry 106 and the signal processing function 108 (generally realised by a digital signal processor (DSP)).

The controller 114 may therefore receive bit error rate (BER) or frame error rate (FER) data from recovered information. The controller is also coupled to a memory device 116 that stores operating regimes, such as decoding/encoding functions and the like. In accordance with the preferred embodiment of the present invention, the memory device 116 also includes a plurality of flags, a number of which relate to dynamically re-configurable operations of the communication unit.

A timer 118 is typically coupled to the controller 114 to control the timing of operations (transmission or reception of time-dependent signals) within the communication unit 100.

As regards the transmit chain, this essentially includes an input device 120, such as a keypad, coupled in series through transmitter/modulation circuitry 122 and a power amplifier 124 to the antenna 102. The transmitter/modulation circuitry 122 and the power amplifier 124 are operationally responsive to the controller.

Of course, the various components within the communication unit 100 can be realised in discrete or integrated component form. It is envisaged that in alternative embodiments, the communication unit 100 may be a portable or mobile radio, a personal digital assistant, a laptop computer or a wirelessly networked PC that requires access to a communication system. The circuitry and controlling software of the transmit and receive chains of the communication unit 100 are preferably also capable of multi-band transmission and reception. Alternatively, it is within the scope of the present invention for more than one transmit and receive chain to be provided, for example one for each frequency band.

The antenna 102 is preferably a multi-band antenna, capable of transmitting and receiving signals within a plurality of frequency bands. However, it is within the scope of the present invention for more than one antenna to be provided, for example one for each frequency band.

The memory device 116 comprises, at least in part, nonvolatile memory (NVM). In accordance with the preferred embodiment of the present invention, within the NVM a plurality of flags are provided, one for each frequency band. Thus, for the example described above there will be four flags, one for each of the frequency bands 850 MHz, 900 MHz, 1800 MHz and 1900 MHz.

When a flag is 'set', i.e. set to a first logical value, the processor 108/controller 114 arrangement configures the communication unit 100 to enable transmission and/or reception within the corresponding frequency band, from a number of selectable multi-band frequencies, as dictated by the communication network. Preferably the controller performs the setting or un-setting of flags, and the processor reads these flags in order to determine how the communication unit needs to encode and transmit, or receive and decode, particular signals. It will be appreciated by a skilled artisan that many other arrangements can be implemented to effect the re-configuration process, and the NVM/processor/controller example given above is only a preferred arrangement.

However, when the flag is 'un-set', i.e. set to a second logical value, the communication unit 100 is prohibited from transmitting or receiving within the corresponding frequency band.

In this manner, the communication unit 100 is capable of being dynamically re-configured to alternate frequency bands, or signal formats by configuring the respective flags in NVM. Initially the required flags may be set prior to sale of the communication unit 100 to an end user depending on, for example,
(i) The country in which the communication unit 100 is sold,
(ii) The network operator with which the user is subscribed,
(iii) The signalling formats supported by the network operator.

Hence, an existing microprocessor or digital signal processor 108 may be adapted to selectively enable or inhibit the operation of the wireless communication unit 100, based on whether a plurality of flags are set or unset. It is envisaged that such re-programming may be effected by any suitable means, for example using an RS232 or USB communication link or over-the-air techniques, as known in the art.

As such, the required adaptation may be employed in the form of processor-implementable instructions or data stored on a storage medium, such as a floppy disk, hard disk, PROM, RAM or any combination of these or other storage multimedia.

The communication unit 100 is capable of receiving enabling and/or inhibiting information such as alternate frequency band messages via the antenna 104 and receive chain. The frequency band message preferably comprises code containing information on how to re-configure the operation of the communication unit to access the alternate frequency bands.

According to a second embodiment of the present invention, the communication unit according to the first embodiment of the present invention is additionally/alternatively capable of transmitting and receiving both digital and analogue signals. The operation of the communication unit is capable of being re-configured such that the communication unit is allowed to transmit and receive:
i) Both digital and analogue signals;
ii) Digital signals only; or
iii) Analogue signals only.

According to a third embodiment of the present invention, the aforementioned communication unit is additionally/alternatively capable of transmitting and receiving wireless signals in a plurality of formats, such as time division multiple access (TDMA), code division multiple access (CDMA), circuit switched and packet switched signals, etc. Preferably, the communication unit is capable of transmitting and receiving signals having formats corresponding to a plurality of standards, such as GSM, GPRS and/or UMTS etc. The RF operation of the communication unit is therefore capable of being re-configured such that the transmission and reception of signals in one or more signal format(s) can be enabled/inhibited.

In a similar manner to the first embodiment, the NVM of the memory device 116 comprises a plurality of flags for the different signalling formats, standards, digital/analogue communication, etc. Thus, in order to support the examples described above, there will be at least additional flags for TDMA, CDMA, packet switched communication, circuit switched communication GSM communication, GPRS communication, UMTS communication, or other signalling formats such as alternative modulation schemes.

Preferably, the operation of the aforementioned communication unit, according to any of the embodiments, can be reconfigured by way of signals received using over-the-air re-programming (OTAR). The operation of the communication unit may also be reconfigured by way of signals received by other means, such as using an RS232 interface provided on the communication unit, infrared signals received using an IrDa interface provided on the communication unit, etc.

Software, for example stored in the memory device 116, is used to process the message code contained within the enabling and/or inhibiting information message and sets and/or un-sets one or more of the frequency band flags located in the NVM. The enabling and/or inhibiting information message may be in the form of a short message service (SMS) message, a Wireless Access Protocol (WAP) message, an Unstructured Supplementary Service Data (USSD) message, an email or any other suitable form.

The message code contains information that, when processed, instructs the controller 114 as to which flags should be set and/or unset. Furthermore, the code may contain information relating to periods of time for which each flag is to be set/unset. Once these time periods have expired, the flags may be returned to their previous state. In this way the communication unit 100 can be allowed access to specific frequency bands for a variable, and controllable, limited period of time.

Where the communication unit receives a plurality of message codes, whether simultaneously or at different times, each code may comprise a priority value, providing a means for deciding the optical communication unit operation when a conflict in the message codes exists. For example, where the communication unit receives two enabling and/or inhibiting information message codes, one instructing that access to the 1800 MHz frequency band be allowed, the other instructing that access to the 1800 MHz frequency band be inhibited, and the two message codes comprise different priority levels, the one with the highest priority takes precedent.

Alternatively, where there is a conflict, the code having the latest date of transmission or reception will take precedent.

The enabling and/or inhibiting information code preferably contains one or more of the following categories of update/re-configuration information:
(i) Permanently set one or more flags;
(ii) Permanently unset one or more flags;
(iii) Temporarily set one or more flags for a period of time, following which return each flag to its prior state;
(iv) Temporarily un-set one or more flags for a period of time, following which return each flag to its prior state;
(v) Temporarily set one or more flags for a period of time, following which unset each flag, irrespective of its prior state; and/or
(vi) Temporarily un-set one or more flags for a period of time, following which set each flag, irrespective of its prior state.

The enabling and/or inhibiting information message received by the communication unit 100 is preferably generated, e.g. by the network operator or the manufacturer of the communication unit, in response to a request by the user. The request may be made in any manner, for example by SMS message, utilising WAP, email, the Internet, by making a phone call or by visiting a shop or other place of business of the network operator, manufacturer, etc. The user may make such a request when, say, travelling to another region that supports alternative frequency bands or signalling formats to the user's home network. As the network operator dynamically controls the enabling and/or inhibiting of operational conditions of the user's wireless communication unit, the network operator can charge the user for the privilege of re-configuring the user's communication unit to operate in other communication services in other regions.

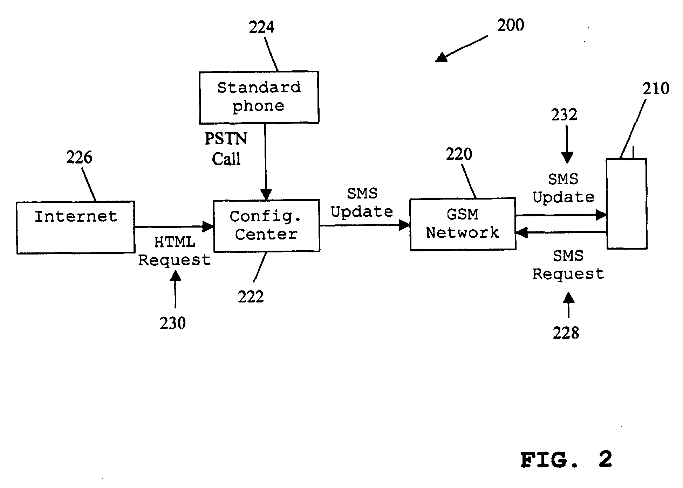

FIG. 2 illustrates a method and system arrangement 200 according to the present invention, by which a user of a communication unit 210 may request and subsequently receive an enabling and/or inhibiting information message for the communication unit 210. The communication unit 210 is in communication with a network, which for the illustrated embodiment is a GSM network 220.

Also in communication with the GSM network 220 is a configuration centre 222. The configuration centre 222 is also in communication with one or more telephones 224 via a public switched telephone network (PSTN) and/or the Internet 226.

When the user of the communication unit 210 wishes to re-configure the operation of the communication unit 210, the user sends a re-configuration message request, which for the illustrated embodiment is in the form of a Short Message Service (SMS) message 228, to the configuration centre 222 via the GSM network 220.

Alternatively, the user may request an operational re-configuration using the Internet 226, sending, for example, an HTML request 230 to the configuration centre 222.

The data provided in the update request message 228, whether originating from the communication unit 210 or via the Internet 226, preferably comprises one or more of the following information items:
(i) An indication of the enabling and/or inhibiting information required;
(ii) An indication of one or more period(s) of time (where required) for which the operational reconfiguration(s) is (are) to be set and/or unset;
(iii) An indication as to the identity of the communication unit, such as the international mobile equipment identification (IMEI) number of the device. This may alternatively be provided in the standard message format rather than in the data provided in the message, if the request message originates from the communication unit 210; or
(iv) An indication as to the identity of the user, such as the international mobile subscriber identification (IMSI) number of, for example, a subscriber identity module (SIM) of the user. This may alternatively be provided in the standard message format rather than in the data provided in the message, if the request message originates from the communication unit 210.

A further alternative, when operational restrictions have been imposed on the communication unit, is for the user to request an operational re-configuration by way of a telephone call via the PSTN, using the standard telephone 224. The user may make such a request verbally, for example by speaking to a person located at the configuration centre 222, or by sending signals, such as a dual-tone multi-frequency (DTMF) signals, which are processed by an automated system at the configuration centre 222.

When the configuration centre 222 receives a re-configuration message request, the configuration centre 222 sends an enabling and/or inhibiting information message, which for the illustrated embodiment is in the form of a SMS message 232, via the GSM network 220, to the communication unit 210.

The enabling and/or inhibiting information SMS message 232 is preferably constructed, in accordance with GSM 03.40: Digital cellular telecommunications systems (Phase 2); Technical realisation of the Short Message Services (SMS); Point-to-Point (PP) of the GSM standards, to indicate that the SMS message 232 contains an instruction (as opposed to, say, a text message).

The instruction contained within the SMS message 232 comprises the enabling and/or inhibiting information message code to be processed by the software stored in the memory of the communication unit 210. When processed, the enabling and/or inhibiting information message code instructs the controller 114 of the communication unit as to which operation or configuration flag(s) should be set and/or un-set, as previously described.

The message may include a text message to be displayed to the user of the communication unit, informing the user of the receipt of a re-configuration message.
Alternatively, the communication unit, on receipt of the message, may display a pre-stored message, or indicate by any other means, for example any audible, tactile or visual indication, to the user informing the user that the communication unit has received a re-configuration message.

Alternatively, the re-configuration message may be in the form of a standard SMS text message. The text within the message includes the message code, which can be entered manually by the user into the communication unit for processing by the software stored in memory.

Preferably, prior to sending the re-configuration message, confirmation is carried out at the configuration centre 222 as to the validity of the request. For example, the user may be required to register with the configuration centre 222 in order to re-configure his/her communication unit. Alternatively, it may be necessary to check that the hardware and/or software of the communication unit is capable of performing the requested re-configuration.

If the request is found to be invalid, a message such as an SMS message is sent to the communication unit, informing the communication unit and/or user that an invalid request has been made. The message may include a text message to be displayed to the user of the communication unit, informing the user of the invalid request. Alternatively the communication unit, on receipt of the message, may display a pre-stored message to the user informing the user that the communication unit has received a message stating that an invalid request has been made.

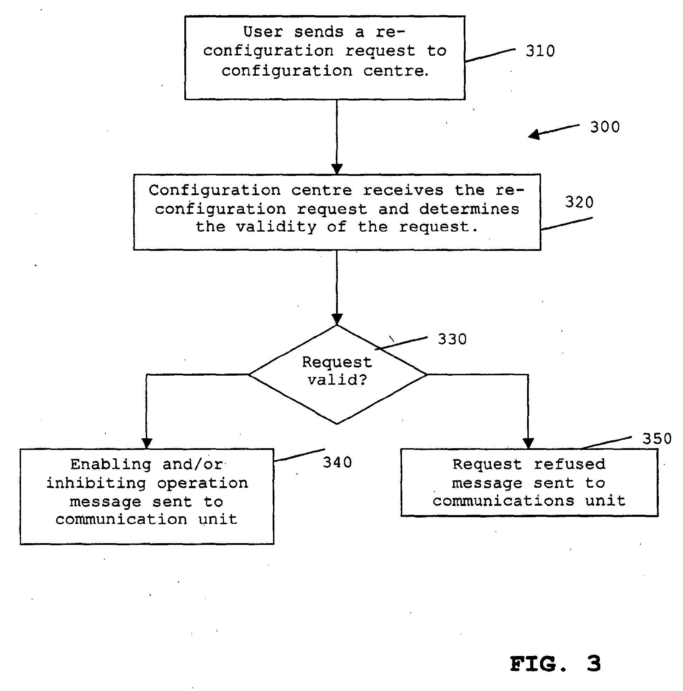

FIG. 3 shows a flowchart of a preferred process 300 of the present invention. The first step 310 is for the user to send an operation re-configuration message request to the configuration centre. Such a re-configuration message request may be in any suitable form, for example from the communication unit itself (e.g. by SMS message), over the Internet, or via a PSTN using a normal telephone.

The configuration centre receives the operation re-configuration message request 320, and determines the validity of the message request 330.

If the update message request is valid, an enabling and/or inhibiting information message, say in the form of an SMS message, is sent to the communication unit. The message contains information on the re-configuration of frequency band(s) and/or signal format(s), for example by setting and/or un-setting respective flags in a memory element, for the wireless communication unit.

If the request is determined to be invalid, a message is sent to the communication unit to inform the communication unit and/or user that the request is invalid.

It is envisaged that the enabling and/or inhibiting operation message could additionally be performed, for example at a point of sale, whereby an RS232 serial interface, IrDa interface, Bluetooth wireless interface, or any other known form of interface could be used to provide the update code to the communication unit.

It will be understood that the improved wireless communication system and method for dynamically enabling and/or inhibiting frequency band and/or signal format operations of a wireless communication unit, as described above, provides at least the advantage that the operation of a communication unit can be dynamically configured and re-configured under control of the network or communication unit manufacturer. Notably, such control can be effected after the communication unit has been sold to an end user. In particular, it does not require the user to know the communication bands or signalling formats supported in the region or country (s)he is visiting, so that they can perform the re-configuration operation themselves.

Furthermore, the aforementioned concepts provide a network operator with more control over the communication units serviced by their network. In addition, the network operator is provided with a real-time, dynamic mechanism for re-configuring the operational aspects of the wireless communication units, at the unit itself. Such control is in contrast to the known mechanism of restricting all calls to/from the communication unit at the network, when the unit is reported as stolen or lost.

Advantageously, such a re-configuration can be at the request of the end user. Alternatively, the re-configuration can be performed independently by the network operator, for which they could levy a charge to the user. Alternatively, the re-configuration can be performed by the communication unit manufacturer, for example by returning the unit to a service centre for re-programming/re-configuring, for which they could also levy a charge to the user.

Whilst the specific and preferred implementations of the embodiments of the present invention are described above, it is clear that one skilled in the art could readily apply variations and modifications of such inventive concepts to particular embodiments or arrangements.

Thus, an improved wireless communication system and method for dynamically enabling and/or inhibiting an operation of a wireless communication unit has been described wherein the aforementioned disadvantages associated with prior art arrangements have been substantially alleviated.

## Claims

1. A wireless communication system for dynamically enabling and/or inhibiting an operation of at least one wireless communication unit operating in the wireless communication system, the wireless communication system comprising:
a communication network (222) to facilitate wireless communication to and/or from a wireless communication unit (100, 210);
the wireless communication system comprising:
at least one wireless communication unit (100, 210) comprising a processor (108) for enabling and/or inhibiting an operational condition of said at least one wireless communication unit (100, 210); and
the wireless communication network (222) transmits operation enabling and/or inhibiting information to the at least one communication unit (100, 210)
wherein the wireless communication system **characterised in that**:
in response to said information, said processor (108) selectively enables or inhibits transmission and/or reception of wireless signals to and/or from the at least one wireless communication unit (100, 210) for a temporary and/or variable time period determined by the communication network (222) in said information in:
(i) A frequency band selected from a plurality of selectable multi-band frequencies, or
(ii) a signal format selected from a plurality of selectable multi-formatted signal types.

2. The communication system according to Claim 1, wherein said multi-formatted signals includes one or more of the following:
(i) analogue or digital communication formats;
(ii) modulation schemes;
(iii) One or more signalling formats or communication standards.

3. The communication system according to Claim 1 or Claim 2, wherein said communication network transmits operation enabling and/or inhibiting information to the at least one communication unit using:
(i) A wired interface, preferably an RS232 interface, provided on the communication unit, or
(ii) an infrared interface provided on the communication unit, or
(iii) A wireless message such as a short message service (SMS) message, a Wireless Access Protocol (WAP) message, an unstructured supplementary service data (USSD) message, or a wireless email.

4. The communication system according to any preceding Claim, wherein said communication unit is further **characterised by** a memory element operably coupled to the processor and containing a number of flags related respectively to a number of said selectable multi-band frequencies or selectable multi-formatted signal types and a controller operably coupled to the processor and memory element for setting or unsetting said flags in response to the processed information.

5. The communication system according to Claim 4, wherein said information contains one or more of the following categories of information:
(i) Permanently set or un-set one or more flags;
(ii) Temporarily set or un-set one or more flags for a period of time, following which each flag is returned to its prior state;
(iii) Temporarily set one or more flags for a period of time, following which each flag is set or un-set, irrespective of its prior state.

6. The communication system according to any preceding Claim, wherein said information includes a priority value that provides a mechanism for resolving a conflict between subsequent information messages.

7. The communication system according to any preceding Claim, wherein said information includes one or more of the following:
(i) An indication of the radio frequency operation or frequency band to be enabled or inhibited in the communication unit;
(ii) An indication of a period of time for which the enabling and/or inhibiting operation is to be performed;
(iii) An indication as to the identity of the communication unit, such as the international mobile equipment identification (IMEI) number of the communication unit, or
(iv) An indication as to the identity of a user of the communication unit, such as the international mobile subscriber identification (IMSI) number of, for example, a subscriber identity module (SIM) of the user.

8. A wireless communication system according to any of the preceding Claims, wherein the plurality of selectable multi-formatted signal types includes at least one of the following: time division multiple access (TDMA), code division multiple access (CDMA), wideband CDMA, circuit switched and packet switched signals, Global System for Mobile communications (GSM), General Packet Radio Service (GPRS), Universal Mobile Telecommunication System (UMTS).

9. A wireless communication system according to any of the preceding Claims, wherein the plurality of selectable frequency bands includes at least one of the following: 850 MHz, 900 MHz, 1800 MHz and 1900 MHz

10. A wireless communication unit (100, 210) adapted to operate in the wireless communication system of any of the preceding Claims.

11. The wireless communication unit (100, 210) according to Claim 10, wherein the wireless communication unit is one of the following: a cellular phone, a portable or mobile radio, a personal digital assistant, a laptop computer or a wirelessly networked personal computer.

12. A wireless communication unit according to Claim 11 or 9 wherein the plurality of selectable multi-formatted signal types includes at least one of the following: time division multiple access (TDMA), code division multiple access (CDMA), wideband CDMA, circuit switched and packet switched signals, Global System for Mobile communications (GSM), General Packet Radio Service (GPRS), Universal Mobile Telecommunication System (UMTS).

13. A wireless communication unit according to Claim 11 or 12 wherein the plurality of selectable frequency bands includes at least one of the following: 850 MHz, 900 MHz, 1800 MHz and 1900 MHz.

14. A method (300) for dynamically enabling and/or inhibiting an operation of at least one wireless communication unit operating in a wireless communication system, the method comprising the steps of:
transmitting (310) a wireless information message to said at least one wireless communication unit to enable or inhibit an operation of the at least one wireless communication unit; and
enabling and/or inhibiting (340) transmission and/or reception of wireless signals to and/or from the at least one wireless communication unit, in response to said information message;
wherein, the method is **characterised by** the step of:
providing, in response to said information message, and via said message, access of the communication unit for a temporary and/or variable time period in:
(i) a frequency band selected from a plurality of selectable multi-band frequencies, or
(ii) a signal format selected from a plurality of selectable multi-formatted signal types.

15. The method according to Claim 14, wherein said multi-formatted signals includes one or more of the following:
(i) Analogue or digital communication formats;
(ii) Modulation schemes;
(ii) One or more signalling formats or communication standards.

16. The method according to Claim 14 or Claim 15, wherein said step of transmitting includes using:
(i) A wired interface, preferably an RS232 interface, provided on the communication unit, or
(ii) An infrared interface provided on the communication unit, or
(iii) A wireless message such as a short message service (SMS) message, a Wireless Access Protocol (WAP) message, an unstructured supplementary service data (USSD) message, or a wireless email.

17. The method according to any of preceding Claims 14 to 16, wherein said information message includes a priority value, the method further **characterised by** the step of:
providing a mechanism for resolving a conflict between subsequent information messages using said priority value.

18. The method according to any of preceding Claims 14 to 17, wherein said information includes one or more of the following:
(i) An indication of a radio frequency operation or frequency band to be enabled or inhibited in the communication unit;
(ii) An indication of a period of time for which the enabling and/or inhibiting operation is to be performed;
(iii) An indication as to the identity of the communication unit, such as the international mobile equipment identification (IMEI) number of the communication unit, or
(iv) An indication as to the identity of a user of the communication unit, such as the international mobile subscriber identification (IMSI) number of, for example, a subscriber identity module (SIM) of the user.

19. A method for dynamically enabling or disabling an operation of a wireless communication unit according to any of Claims 14 to 18, wherein the plurality of selectable multi-formatted signal types includes at least one of the following: time division multiple access (TDMA), code division multiple access (CDMA), wideband CDMA, circuit switched and packet switched signals, Global System for Mobile communications (GSM), General Packet Radio Service (GPRS), Universal Mobile Telecommunication System (UMTS).

20. A method for dynamically enabling or disabling an operation of a wireless communication unit according to any of Claims 14 to 19, wherein the plurality of selectable frequency bands includes at least one of the following: 850 MHz, 900 MHz, 1800 MHz and 1900 MHz.

## Patentansprüche

1. Drahtloses Kommunikationssystem zur dynamischen Aktivierung und/oder Hemmung einer Operation von mindestens einer in dem drahtlosen Kommunikationssystem operierenden drahtlosen Kommunikationseinheit, wobei das drahtlose Kommunikationssystem umfasst:
ein Kommunikationsnetz (222), um eine drahtlose Kommunikation zu und/oder von einer drahtlosen Kommunikationseinheit (100, 210) zu ermöglichen;
wobei das drahtlose Kommunikationssystem umfasst:
mindestens eine drahtlose Kommunikationseinheit (100, 210), umfassend einen Prozessor (108) zum Aktivieren und/oder Hemmen eines Betriebszustands der mindestens einen drahtlosen Kommunikationseinheit (100, 210), und
wobei das drahtlose Kommunikationsnetz (222) eine einen Betrieb aktivierende und/oder hemmende Information an die mindestens eine Kommunikationseinheit (100, 210) überträgt,
wobei das drahtlose Kommunikationsnetz **dadurch gekennzeichnet ist, dass**:
der Prozessor (108) in Reaktion auf die Information selektiv eine Übertragung und/oder einen Empfang von drahtlosen Signalen an und/oder von der wenigstens einen drahtlosen Kommunikationseinheit (100, 210) für eine temporäre oder eine variable durch das Kommunikationsnetz (222) in der Information bestimmte Zeitdauer in
(i) einem von mehreren auswählbaren Multi-Band-Frequenzen ausgewählten Frequenzband, oder
(ii) einem aus einer Vielzahl von auswählbaren multi-formatierten Signaltypen gewählten Signalformat aktiviert oder hemmt.

2. Kommunikationssystem nach Anspruch 1, wobei die multi-formatierten Signale eines oder mehrere der Folgenden umfassen:
(i) analoge oder digitale Kommunikationsformate;
(ii) Modulationsverfahren;
(iii) ein oder mehrere Signalisierungsformate oder Kommunikationsstandards.

3. Kommunikationssystem nach Anspruch 1 oder Anspruch 2, wobei das Kommunikationsnetzwerk eine einen Betrieb aktivierende und/oder hemmende Information an die mindestens eine Kommunikationseinheit überträgt unter Verwendung von:
(i) einer auf der Kommunikationseinheit vorgesehenen drahtgebundenen Schnittstelle, vorzugsweise einer RS232-Schnittstelle, oder
(ii) einer auf der Kommunikationseinheit vorgesehen Infrarotschnittstelle, oder
(iii) einer drahtlosen Nachricht, wie eine Short-Message-Service (SMS) - Nachricht, eine Wireless-Access-Protocol (WAP) -Nachricht, eine Unstructured-Supplementary-Service-Data (USSD) -Nachricht oder eine drahtlosen E-Mail.

4. Kommunikationssystem nach einem der vorhergehenden Ansprüche, wobei die Kommunikationseinheit ferner **gekennzeichnet ist durch** ein operativ an den Prozessor gekoppeltes und eine Anzahl von, auf eine Anzahl der auswählbaren Multi-Band-Frequenzen oder der auswählbaren multi-formatierten Signaltypen bezogene, Flags aufweisendes Speicherelement und **durch** einen operativ an den Prozessor und das Speicherelement zum, als Reaktion auf die verarbeiteten Informationen, Setzen oder Aufheben der Flags gekoppelten Kontroller.

5. Kommunikationssystem nach Anspruch 4, wobei die Information eine oder mehrere der folgenden Kategorien von Informationen umfasst:
(i) permanentes Setzen oder Aufheben eines oder mehrerer Flags;
(ii) über einen Zeitraum vorübergehendes Setzen oder Aufheben eines oder mehrerer Flags, das gefolgt ist von einem Zurücksetzen jedes Flags in seinen vorherigen Zustand;
(iii) über einen Zeitraum vorübergehendes Setzen eines oder mehrerer Flags, das gefolgt ist von einem Setzen oder Aufheben jedes Flags, unabhängig von seinem vorherigen Zustand.

6. Kommunikationssystem nach einem der vorhergehenden Ansprüche, wobei die Information einen Prioritätswert umfasst, der einen Mechanismus zur Lösung eines Konflikts zwischen nachfolgenden Informationsmeldungen zur Verfügung stellt.

7. Kommunikationssystem nach einem der vorhergehenden Ansprüche, wobei die Information eines oder mehrere der Folgenden umfasst:
(i) eine Angabe über den zu aktivierenden oder zu hemmenden RadioFrequenz-Betrieb oder das zu aktivierende oder zu hemmende Frequenzband in der Kommunikationseinheit;
(ii) eine Angabe über einen Zeitraum, in dem die Aktivierung und/oder Hemmung erfolgen soll;
(iii) eine Angabe über die Identität der Kommunikationseinheit, wie die International-Mobile-Equipment-Identification (IMEI) -Nummer der Kommunikationseinheit, oder
(iv) eine Angabe über die Identität eines Benutzers der Kommunikationseinheit, wie die International-Mobile-Subscriber-Identification (IMSI)-Nummer, zum Beispiel ein Subscriber-Identity-Module (SIM) des Benutzers.

8. Drahtloseses Kommunikationssystem nach einem der vorangehenden Ansprüche, wobei die Vielzahl der auswählbaren multi-formatierten Signaltypen zumindest eines der folgenden umfasst: Time-Division-Multiple-Access (TDMA), Code-Division-Multiple-Access (CDMA), Breitband-CDMA, leitungsvermittelte oder paketvermittelte Signale, Global-System-for-Mobile-communication (GSM), Universal-Mobile-Telecommunication-System (UMTS).

9. Drahtloseses Kommunikationssystem nach einem der vorangehenden Ansprüche, wobei die Vielzahl der auswählbaren Frequenzbänder zumindest eines der folgenden umfasst: 850MHz, 900 MHz, 180MHz und 1900MHz.

10. Drahtlose Kommunikationseinheit (100, 210), geeignet um in dem drahtlosen Kommunikationssystem nach einem der vorhergehenden Ansprüche zu operieren.

11. Drahtlose Kommunikationseinheit (100, 210) nach Anspruch 10, wobei die drahtlose Kommunikationseinheit eines der Folgenden ist: ein Mobiltelefon, ein tragbares oder mobiles Radio, ein persönlicher digitaler Assistent, ein Laptop-Computer oder ein drahtlos vernetzter Personal Computer.

12. Drahtlose Kommunikationseinheit nach Anspruch 11 oder 9, wobei die Vielzahl der auswählbaren multi-formatierten Signaltypen zumindest eines der Folgenden umfassen: Time-Division-Multiple-Access (TDMA), Code-Division-Multiple-Access (CDMA), Breitband-CDMA, leitungsvermittelte oder paketvermittelte Signale, Global-System-for-Mobile-communication (GSM), Universal-Mobile-Telecommunication-System (UMTS).

13. Drahtlose Kommunikationseinheit nach Anspruch 11 oder 12, wobei die Vielzahl der auswählbaren Frequenzbänder zumindest eines der Folgenden umfasst: 850MHz, 900 MHz, 1800MHz und 1900MHz.

14. Verfahren (300) zur dynamischen Aktivierung und/oder Hemmung einer Operation von mindestens einer drahtlosen Kommunikationseinheit, die in einem drahtlosen Kommunikationssystem operiert, wobei das Verfahren die Schritte umfasst:
Übertragen (310) einer drahtlosen Informationsnachricht an die mindestens eine drahtlose Kommunikationseinheit, um einen Betrieb der wenigstens einen drahtlosen Kommunikationseinheit zu aktivieren oder zu hemmen;
Aktivieren und/oder Hemmen (340) einer Übertragung und/oder eines Empfangs von drahtlosen Signalen an und/oder von der wenigstens einen drahtlosen Kommunikationseinheit als Reaktion auf die Informationsnachricht, wobei das Verfahren durch den Schritt gekennzeichnet ist:
Zurverfügungstellen, in Reaktion auf die Informationsnachricht und durch die Informationsnachricht, eines Zugangs von der Kommunikationseinheit für einen temporären und/oder variablen Zeitraum in:
(i) einem aus einer Vielzahl auswählbarer Multi-Band-Frequenzen ausgewählten Frequenzband, oder
(ii) einem aus einer Vielzahl von auswählbaren multi-formatierten Signaltypen ausgewähltes Signalformat.

15. Verfahren nach Anspruch 14, wobei die multi-formatierten Signale eines oder mehrere der Folgenden umfassen:
(i) analoge oder digitale Kommunikationsformate;
(ii) Modulationsverfahren;
(iii) ein oder mehrere Signalisierungsformate oder Kommunikationsstandards.

16. Verfahren nach Anspruch 14 oder Anspruch 15, wobei der Schritt des Übertragens eine Verwendung umfasst von:
(i) einer auf der Kommunikationseinheit angeordneten drahtgebundenen Schnittstelle, vorzugsweise einer RS232-Schnittstelle, oder
(ii) einer auf der Kommunikationseinheit vorgesehenen Infrarotschnittstelle, oder
(iii) einer drahtlosen Nachricht wie eine Short-Message-Service (SMS)-Nachricht, eine Wireless-Access-Protocol (WAP)-Nachricht oder eine Unstructured-Supplementary-Service-Data (USSD)-Nachricht oder eine drahtlose E-Mail.

17. Verfahren nach einem der vorhergehenden Ansprüche 14 bis 16, wobei die Informationsnachricht einen Prioritätswert enthält, wobei das Verfahren ferner durch den Schritt gekennzeichnet ist:
Zurverfügungstellen eines Mechanismus zur Lösung eines Konflikts zwischen aufeinanderfolgenden Datennachrichten mit dem Prioritätswert.

18. Verfahren nach einem der vorhergehenden Ansprüche 14 bis 17, wobei die Information eines oder mehrere der Folgenden umfasst:
(i) eine Angabe über den zu aktivierenden oder zu hemmenden RadioFrequenz-Betrieb oder das zu aktivierende oder zu hemmende Frequenzband in der Kommunikationseinheit;
(ii) eine Angabe über einen Zeitraum, in dem die Aktivierung und/oder Hemmung erfolgen soll;
(iii) eine Angabe über die Identität der Kommunikationseinheit, wie die International-Mobile-Equipment-Identification (IMEI) -Nummer der Kommunikationseinheit, oder
(iv) eine Angabe über die Identität eines Benutzers von der Kommunikationseinheit, wie die International-Mobile-Subscriber-Identification (IMSI)-Nummer, zum Beispiel ein Subscriber-Identity-Module (SIM) des Benutzers.

19. Verfahren zur dynamischen Aktivierung oder Hemmung eines Betriebs einer drahtlosen Kommunikationseinheit nach einem der Ansprüche 14 bis 18, wobei die Vielzahl der auswählbaren multi-formatierten Signaltypen zumindest eines der Folgenden umfasst: Time-Division-Multiple-Access (TDMA), Code-Division-Multiple-Access (CDMA), Breitband-CDMA, leitungsvermittelte oder paketvermittelte Signale, Global-System-for-Mobile-communication (GSM), Universal-Mobile-Telecommunication-System (UMTS).

20. Verfahren zur dynamischen Aktivierung oder Hemmung einer Operation einer drahtlosen Kommunikationseinheit nach einem der Ansprüche 14 bis 19, wobei die Vielzahl der auswählbaren Frequenzbänder zumindest eines der Folgenden umfasst: 850MHz, 900 MHz, 1800MHz und 1900MHz.

## Revendications

1. Système de communication sans fil pour permettre et/ou empêcher dynamiquement une opération d'au moins une unité de communication sans fil fonctionnant dans le système de communication sans fil, le système de communication sans fil comprenant :
un réseau de communication (222) pour faciliter la communication sans fil vers et/ou depuis une unité de communication sans fil (100, 210) ;
le système de communication sans fil comprenant :
au moins une unité de communication sans fil (100, 210) comprenant un processeur (108) pour permettre et/ou empêcher une condition opérationnelle de ladite au moins une unité de communication sans fil (100, 210) ; et
le réseau de communication sans fil (222) transmet des informations de permission et/ou d'empêchement d'opération à la au moins une unité de communication (100, 210)
dans lequel le système de communication sans fil est **caractérisé en ce que** :
en réponse auxdites informations, ledit processeur (108) permet ou empêche sélectivement la transmission et/ou la réception de signaux sans fil vers et/ou depuis la au moins une unité de communication sans fil (100, 210) pendant une période de temps temporaire et/ou variable déterminée par le réseau de communication (222) dans lesdites informations dans :
(i) une bande de fréquences sélectionnée parmi une pluralité de fréquences multi-bandes sélectionnables, ou
(ii) un format de signal sélectionné parmi une pluralité de types de signaux multi-formatés sélectionnables.

2. Système de communication selon la revendication 1, dans lequel lesdits signaux multi-formatés comprennent un ou plusieurs de ce qui suit :
(i) des formats de communication analogique ou numérique ;
(ii) des schémas de modulation ;
(iii) un ou plusieurs formats de signalisation ou des normes de communication.

3. Système de communication selon la revendication 1 ou la revendication 2, dans lequel ledit réseau de communication transmet des informations de permission et/ou d'empêchement d'opération à la au moins une unité de communication en utilisant :
(i) une interface filaire, de préférence une interface RS232, pourvue sur l'unité de communication, ou
(ii) une interface infrarouge pourvue sur l'unité de communication, ou
(iii) un message sans fil comme un message de service de messages courts (SMS), un message de protocole d'accès sans fil (WAP), un message de données de service supplémentaire non structurées (USSD), ou un courriel sans fil.

4. Système de communication selon l'une quelconque des revendications précédentes, dans lequel ladite unité de communication est en outre **caractérisée par** un élément de mémoire couplé fonctionnellement au processeur et contenant un nombre de drapeaux lié respectivement à un nombre desdites fréquences multi-bandes sélectionnables ou desdits types de signaux multi-formatés sélectionnables et un contrôleur couplé fonctionnellement au processeur et à l'élément de mémoire pour activer ou désactiver lesdits drapeaux en réponse aux informations traitées.

5. Système de communication selon la revendication 4, dans lequel lesdites informations contiennent une ou plusieurs des catégories d'informations suivantes :
(i) activer ou désactiver de façon permanente un ou plusieurs drapeaux ;
(ii) activer ou désactiver temporairement un ou plusieurs drapeaux pendant une période de temps, après quoi chaque drapeau est retourné à son état antérieur ;
(iii) activer temporairement un ou plusieurs drapeaux pendant une période de temps, après quoi chaque drapeau est activé ou désactivé, indépendamment de son état antérieur.

6. Système de communication selon l'une quelconque des revendications précédentes, dans lequel lesdites informations comprennent une valeur de priorité qui fournit un mécanisme pour résoudre un conflit entre des messages d'information subséquents.

7. Système de communication selon l'une quelconque des revendications précédentes, dans lequel lesdites informations comprennent une ou plusieurs de ce qui suit :
(i) une indication de l'opération radiofréquence ou de la bande de fréquences à permettre ou empêcher dans l'unité de communication ;
(ii) une indication d'une période de temps pendant laquelle l'opération de permission et/ou d'empêchement est à effectuer ;
(iii) une indication quant à l'identité de l'unité de communication, comme le numéro d'identification internationale d'équipement mobile (IMEI) de l'unité de communication, ou
(iv) une indication quant à l'identité d'un utilisateur de l'unité de communication, comme le numéro d'identification internationale d'abonné mobile (IMSI) de, par exemple, un module d'identité d'abonné (SIM) de l'utilisateur.

8. Système de communication sans fil selon l'une quelconque des revendications précédentes, dans lequel la pluralité de types de signaux multi-formatés sélectionnables comprend au moins un de ce qui suit : l'accès multiple par répartition dans le temps (TDMA), l'accès multiple par répartition en code (CDMA), CDMA à large bande, les signaux à commutation de circuits et à commutation de paquets, le système mondial de communications mobiles (GSM), le service général de radiocommunication par paquets (GPRS), le système universel de télécommunication mobile (UMTS).

9. Système de communication sans fil selon l'une quelconque des revendications précédentes, dans lequel la pluralité de bandes de fréquences sélectionnables comprend au moins un de ce qui suit : 850 MHz, 900 MHz, 1800 MHz et 1900 MHz.

10. Unité de communication sans fil (100, 210) adaptée pour fonctionner dans le système de communication sans fil selon l'une quelconque des revendications précédentes.

11. Unité de communication sans fil (100, 210) selon la revendication 10, dans laquelle l'unité de communication sans fil est un de ce qui suit : un téléphone cellulaire, une radio portable ou mobile, un assistant numérique personnel, un ordinateur portatif ou un ordinateur personnel mis en réseau de façon sans fil.

12. Unité de communication sans fil selon la revendication 11, dans laquelle la pluralité de types de signaux multi-formatés sélectionnables comprend au moins un de ce qui suit : l'accès multiple par répartition dans le temps (TDMA), l'accès multiple par répartition en code (CDMA), CDMA à large bande, les signaux à commutation de circuits et à commutation de paquets, le système mondial de communications mobiles (GSM), le service général de radiocommunication par paquets (GPRS), le système universel de télécommunication mobile (UMTS).

13. Unité de communication sans fil selon la revendication 11 ou 12, dans laquelle la pluralité de bandes de fréquences sélectionnables comprend au moins un de ce qui suit : 850 MHz, 900 MHz, 1800 MHz et 1900 MHz.

14. Procédé (300) pour permettre et/ou empêcher dynamiquement une opération d'au moins une unité de communication sans fil fonctionnant dans le système de communication sans fil, le procédé comprenant les étapes consistant à :
transmettre (310) un message d'information sans fil à ladite au moins une unité de communication sans fil pour permettre ou empêcher une opération de la au moins une unité de communication sans fil ; et
permettre et/ou empêcher (340) la transmission et/ou la réception de signaux sans fil vers et/ou depuis la au moins une unité de communication sans fil, en réponse audit message d'information ;
dans lequel, le procédé est **caractérisé par** l'étape consistant à :
fournir, en réponse audit message d'information, et via ledit message, l'accès de l'unité de communication pendant une période de temps temporaire et/ou variable dans :
(i) une bande de fréquences sélectionnée parmi une pluralité de fréquences multi-bandes sélectionnables, ou
(ii) un format de signal sélectionné parmi une pluralité de types de signaux multi-formatés sélectionnables.

15. Procédé selon la revendication 14, dans lequel lesdits signaux multi-formatés comprennent un ou plusieurs de ce qui suit :
(i) des formats de communication analogique ou numérique ;
(ii) des schémas de modulation ;
(iii) un ou plusieurs formats de signalisation ou des normes de communication.

16. Procédé selon la revendication 14 ou la revendication 15, dans lequel ladite étape de transmission comprend l'utilisation :
(i) d'une interface filaire, de préférence une interface RS232, pourvue sur l'unité de communication, ou
(ii) d'une interface infrarouge pourvue sur l'unité de communication, ou
(iii) d'un message sans fil comme un message de service de messages courts (SMS), un message de protocole d'accès sans fil (WAP), un message de données de service supplémentaire non structurées (USSD), ou un courriel sans fil.

17. Procédé selon l'une quelconque des revendications 14 à 16 précédentes, dans lequel ledit message d'information comprend une valeur de priorité, le procédé en outre **caractérisé par** l'étape consistant à :
fournir un mécanisme pour résoudre un conflit entre des messages d'information subséquents en utilisant ladite valeur de priorité.

18. Procédé selon l'une quelconque des revendications 14 à 17 précédentes, dans lequel lesdites informations comprennent une ou plusieurs de ce qui suit :
(i) une indication de l'opération radiofréquence ou de la bande de fréquences à permettre ou empêcher dans l'unité de communication ;
(ii) une indication d'une période de temps pendant laquelle l'opération de permission et/ou d'empêchement est à effectuer ;
(iii) une indication quant à l'identité de l'unité de communication, comme le numéro d'identification internationale d'équipement mobile (IMEI) de l'unité de communication, ou
(iv) une indication quant à l'identité d'un utilisateur de l'unité de communication, comme le numéro d'identification internationale d'abonné mobile (IMSI) de, par exemple, un module d'identité d'abonné (SIM) de l'utilisateur.

19. Procédé pour permettre ou interdire dynamiquement une opération d'une unité de communication sans fil selon l'une quelconque des revendications 14 à 18, dans lequel la pluralité de types de signaux multi-formatés sélectionnables comprend au moins un de ce qui suit : l'accès multiple par répartition dans le temps (TDMA), l'accès multiple par répartition en code (CDMA), CDMA à large bande, les signaux à commutation de circuits et à commutation de paquets, le système mondial de communications mobiles (GSM), le service général de radiocommunication par paquets (GPRS), le système universel de télécommunication mobile (UMTS).

20. Procédé pour permettre ou interdire dynamiquement une opération d'une unité de communication sans fil selon l'une quelconque des revendications 14 à 19, dans lequel la pluralité de bandes de fréquences sélectionnables comprend au moins un de ce qui suit : 850 MHz, 900 MHz, 1800 MHz et 1900 MHz.
